# EUROPÄISCHE PATENTSCHRIFT

(11) **EP 1 966 323 B1**
(45) Veröffentlichungstag und Bekanntmachung des Hinweises auf die Patenterteilung: **12.08.2009**
(21) Anmeldenummer: 06818571.9
(22) Anmeldetag: 16.11.2006
(51) Int. Cl.: C09B 41/00, C09B 67/18, C09D 11/02, C09B 67/20

(54) **AZOPIGMENTPRÄPARATION**
AZO PIGMENT PREPARATION
PREPARATION D'AZOPIGMENTS

(30) Priorität: 21.12.2005 DE 102005061066
(43) Veröffentlichungstag der Anmeldung: 10.09.2008
(73) Patentinhaber: Clariant Produkte (Deutschland) GmbH, 65929 Frankfurt am Main (DE)
(72) Erfinder: GEROLD, Jürgen, 55294 Bodenheim (DE)
(74) Vertreter: Hütter, Klaus
(86) Internationale Anmeldenummer: PCT/EP2006/010980
(87) Internationale Veröffentlichungsnummer: WO 2007/079813

(56) Entgegenhaltungen:
- EP-A- 0 567 918
- EP-A1- 0 057 880
- EP-A1- 0 062 304
- US-A- 3 653 936

## Beschreibung

Die vorliegende Erfindung liegt auf dem Gebiet der amin-präparierten Azopigmente, die insbesondere in Druckfarben, wie z.B. im Illustrationstiefdruck, Anwendung finden.

Aus der EP 0 057 880 A1 ist bekannt, dass farbstarke, gut fließfähige und gut dispergierbare Azopigmentpräparationen erhalten werden, wenn man ein langkettiges aliphatisches primäres Amin und ein Diamin der Formel H₂N-A-NH₂, worin A ein aliphatischer Kohlenwasserstoffrest mit 6 bis 30 C-Atomen ist, während oder nach der Kupplung zusetzt. Als ein Beispiel für Diamine der Formel H₂N-A-NH₂ ist 4,4'-Diamino-dicyclohexyl-methan bekannt. Diese Verbindung ist kommerziell erhältlich und liegt üblicherweise als Mischung dreier Stereoisomere vor, dem cis,cis-Isomer, dem cis, trans-Isomer und dem trans,trans-Isomer, wobei gefunden wurde, dass der trans, trans-Anteil unter 20 % liegt :

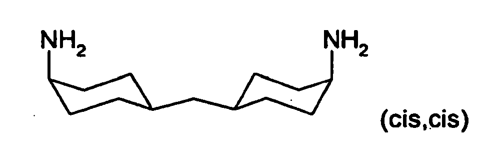

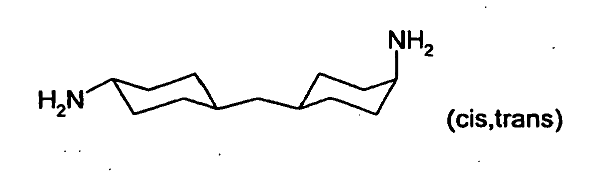

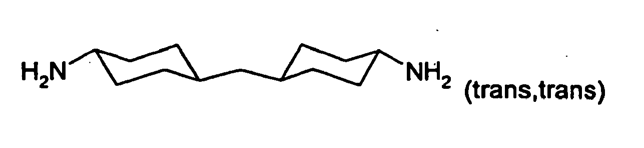

Aus der DE 43 34 790 A1 und der US 3,347,917 sind Verfahren bekannt, nach denen 4,4'-Diamino-dicyclohexyl-methan mit hohem Gehalt an trans, trans-Isomerem erhalten werden kann. Eine bekannte Methode besteht z.B. darin, ein Isomerengemisch von 4,4'-Diamino-dicyclohexyl-methan zunächst in Toluol mit zwei Equivalenten Benzaldehyd zum entsprechenden 4,4'-Di-(benzylidenamino)-dicyclohexylmethan umzusetzen. Das gesamte Isomerengemisch wird anschließend durch Basenkatalyse in Dimethoxyethan als Lösungsmittel zum thermodynamisch stabilsten trans,trans-Diamin isomerisiert. Die Hydrolyse der Schiffschen Base ergibt isomerenreines trans,trans- 4,4'-Diamino-dicyclohexyl-methan.

4,4'-Diamino-dicyclohexyl-methan mit hohem trans, trans-Anteil ist hür die großtechnische Herstellung von Polyurethan-Elastomeren mit verbesserten Materialeigenschaften, wie Temperaturstabilität und Lösemittelresistenz, von Bedeutung (DE 43 34 790 A1).

Die EP,A,567,918 beschreibt Azopigmentpräpartionen, die neben anderen Additiven auch Bis-4-aminocyclo hexyl methan enthalten; sie ergeben beim Einarbeiten in Illustrationstief- druck farben glänzende, farbstarke Drucke.

Der vorliegenden Erfindung lag die Aufgabe zugrunde, Azopigmentpräparationen insbesondere für den Einsatz in Tiefdruckfarben zur Verfügung zu stellen, die sich durch eine verbesserte optische Dichte, höheren Glanz und Nichtdurchschlagen im Illustrationstiefdruck auszeichnen.

Es wurde gefunden, dass eine Azopigmentpräparation mit einem Gehalt an 4,4'-Diamino-dicyclohexyl-methan, das sich durch einen erhöhten Anteil an trans, trans-Isomerem auszeichnet, überraschenderweise die vorstehende Aufgabe löst.

Gegenstand der vorliegenden Erfindung ist daher eine Azopigmentpräparation, gekennzeichnet durch einen Gehalt an 4,4'-Diamino-dicyclohexyl-methan, wobei der Anteil des trans, trans-Isomeren mindestens 25 %, bezogen auf die Gesamtmenge an 4,4'-Diamino-dicyclohexyl-methan, beträgt.

Die Herstellung von reinem trans,trans-Isomer ist technisch aufwändig. Der Einsatz von reinem trans, trans-Isomer ist zwar möglich, aber für die Zwecke der vorliegenden Erfindung gar nicht erforderlich. Aus ökonomischen und technischen Gründen ist es ausreichend, den Anteil des trans, trans-Isomeren auf 25 bis 75 %, insbesondere 35 bis 60 %, bezogen auf die Gesamtmenge an 4,4'-Diamino-dicyclohexyl-methan, zu begrenzen.

Es wurde gefunden, dass unabhängig von der Gesamtmenge des eingesetzten 4,4'-Diamino-dicyclohexyl-methans der Anteil der cis, cis- und cis, trans-Isomeren im Isomerengemisch insgesamt nicht höher als 75 % sein sollte. Möglicherweise ist eine Störung des Kristallgitters des Azopigments durch nicht-planare Stereoisomere für eine Verschlechterung der coloristischen Eigenschaften verantwortlich.

Die eingesetzte Menge an 4,4'-Diamino-dicyclohexyl-methan, d.h. in der Regel ein Stereoisomerengemisch mit erfindungsgemäßem trans, trans-Anteil, beträgt zweckmäßig 2 bis 30 Gew.-%, vorzugsweise 5 bis 20 Gew.-%, bezogen auf das Gewicht des Azopigments.

Als Azopigmente kommen alle in Druckfarben verwendeten Produkte in Betracht, vorzugsweise Diarylgelbpigmente, insbesondere der Acetoacetylarylamid-Reihe. Besonders bevorzugt sind C.I. Pigment Yellow 12, 13, 14, 17, 55, 63, 81, 83, 87, 90, 106, 113, 114, 121, 124, 126, 127, 136, 152, 170, 171, 172, 174, 176 und 188, sowie C.I. Pigment Red 53:1. Ganz besonders bevorzugt ist C.I. Pigment Yellow 12.

Die erfindungsgemäßen Azopigmentpräparationen enthalten vorzugsweise noch langkettige aliphatische primäre Amine mit 6 bis 30 C-Atomen, wie beispielsweise Cocosfettamin, Oleylamin, Stearylamin, Talgfettamin, Alkylalkylendiamine wie z.B. Talgfettpropylendiamin, oder Talgfettdipropylentriamin. Der Gehalt der langkettigen aliphatischen primären Amine mit 6 bis 30 C-Atomen beträgt vorzugsweise 1 bis 30 Gew.-%, insbesondere 5 bis 20 Gew.-%, bezogen auf das Gesamtgewicht der Azopigmentpräparation. Anstelle der genannten Amine können auch deren Salze, z.B. Acetate, eingesetzt werden.

Das Mengenverhältnis des langkettigen aliphatischen primären Amins zum 4,4'-Diamino-dicyclohexyl-methan kann in gewissen Grenzen schwanken und richtet sich nach den angestrebten Eigenschaften des jeweiligen Pigments. Die günstigsten Relationen sind durch einfache Vorversuche leicht zu ermitteln.

Weiterhin kann es vorteilhaft sein, 1 bis 25 Gew.-%, insbesondere 2 bis 20 Gew.-%, bezogen auf das Gesamtgewicht der Azopigmentpräparation, eines Additivs aus der Gruppe der Fettalkoholpolyglykolether, Alkylphenolpolyglykolether, der quartären Ammoniumsalze von Fettaminen und Fettamin-N-oxiden oder einer Kombination davon, zuzusetzen. Beispiele sind Stearyl-trimethyl-ammoniumchlorid, Cetyl- trimethyl-ammoniumchlorid, Cocosalkyl- trimethyl-ammoniumchlorid, Cocosalkyl- dimethyl-benzylammoniumchlorid, Dodecyl-benzyl-dimethyl-ammoniumchlorid, Dicocosalkyl-dimethyl-ammoniumchlorid, Distearyl-dimethyl-ammoniumchlorid, Ditalgfettalkyldimethyl-ammoniumchlorid und Cocosalkyl-dimethyl-aminoxid.

Die erfindungsgemäßen Pigmentpräparationen können neben den genannten Komponenten noch weitere übliche Hilfsmittel oder Zusatzstoffe enthalten, wie beispielsweise Tenside, nichtpigmentäre und pigmentäre Dispergiermittel, Füllstoffe, Stellmittel, Harze, Wachse, Entschäumer, Antistaubmittel, Extender, Antistatika, Farbmittel zum Nuancieren, Konservierungsmittel, Trocknungsverzögerungsmittel, Additive zur Steuerung der Rheologie, Netzmittel, Antioxidantien, UV-Absorber und Lichtstabilisatoren, Biocide, oder eine Kombination davon, vorzugsweise in einer Menge von 0,1 bis 25 Gew.-%, insbesondere 0,5 bis 15 Gew.-%, bezogen auf das Gesamtgewicht der Pigmentzubereitung.

Gegenstand der Erfindung ist auch ein Verfahren zur Herstellung einer Azopigmentpräparation, dadurch gekennzeichnet, dass das 4,4'-Diamino-dicyclohexyl-methan mit einem trans, trans-Anteil von mindestens 25 % vor, während oder nach der Azokupplung, aber noch vor der Isolierung des Azopigments zugesetzt wird. Beispielsweise wird es als Fällungshilfsmittel bei der Fällung der Kupplungskomponente eingesetzt, nach dem Kuppeln der Kuppelbrühe zugesetzt oder erst der Presskuchen damit präpariert. Weiterhin kann es bei einem anschließenden Finishprozess zugesetzt werden.
Die vorstehend genannten langkettigen aliphatischen primären Amine sowie die Additive können zusammen mit dem 4,4'-Diamino-dicyclohexyl-methan oder getrennt davon zugegeben werden.

Die weitere Aufarbeitung der Pigmentsuspension erfolgt nach üblichen Methoden, wie Filtrieren, Waschen, Trocknen und Mahlen. Man erhält eine gut dispergierbare Azopigmentpräparation, die sehr farbstarke, gut fließfähige Druckfarben, insbesondere Tiefdruckfarben auf Toluolbasis, liefert, mit denen glänzende und nicht durchschlagende Drucke erhalten werden.

Die erfindungsgemäßen Pigmentpräparationen lassen sich zum Pigmentieren von hochmolekularen organischen Materialien natürlicher oder synthetischer Herkunft einsetzen, beispielsweise von Kunststoffen, Harzen, Lacken, Anstrichfarben, elektrophotographischen Tonern und Entwicklern, Elektretmaterialien, Farbfiltern sowie von Tinten, Druckfarben und Saatgut. Besonders bevorzugt ist jedoch deren Verwendung zur Herstellung von Druckfarben, insbesondere Tiefdruckfarben auf Toluolbasis.
Gegenstand der Erfindung ist auch eine Druckfarbe, insbesondere Tiefdruckfarbe, die die erfindungsgemäße Azopigmentpräparation enthält.

### Beispiele

Herstellung von angereichertem trans, trans-4,4'-Diamino-dicyclohexyl-methan

Gemäß Beispiel 1 bis 3 der DE 43 34 790 A1 wurde eine ausreichende Menge an 4,4'-Diamino-dicyclohexyl-methan mit etwa 75 % trans, trans-Anteil (bestimmt durch ¹H-NMR-Spektroskopie) hergestellt, welches durch Zumischen zu kommerziell erhältlichem 4,4'-Diamino-dicyclohexyl-methan (unter 20 % trans, trans-Isomer) ein Produkt mit 40 % trans, trans- bzw. 25 % trans, trans-Isomer ergab, das in den nachfolgenden Beispielen eingesetzt wurde.

### Beispiel 1: P.Y. 12

38 g 3,3'-Dichlorbenzidin (DCB) werden in 245 g eines Eis-/Wassergemisches und 106 g 31 %iger Salzsäure zu einer homogenen Suspension verrührt und bei 0-15°C mittels kontinuierlicher Zugabe von 57 g einer 38 %igen Natriumnitritlösung bis-diazotiert. Am Ende der Diazotierung wird überschüssiges Nitrit durch Zugabe von ca. 0,5 g Amidosulfonsäure zerstört. 53,2 g Acetessiganilid werden in 684 g Wasser und 57,5 g 50 %iger Natronlauge eingetragen. Nach sorgfältigem Rühren erhält man eine klare Lösung, die auf 0 - 5°C abgekühlt wird. Es werden 2 g Oleylaminacetat zugegeben und die Kupplungskomponente anschließend durch Zugabe von 25,4 g 80 %iger Essigsäure ausgefällt.
Die Kupplungsreaktion wird ausgeführt, in dem man die DCB-Tetrazolösung innerhalb von 60 min zu der gefällten Kupplungskomponente mit kontinuierlicher Geschwindigkeit unter die Oberfläche zudosiert. Nach Beendigung der Reaktion erhöht man die Temperatur auf 40°C und gibt 2,5 g Dodecylbenzyldimethylammoniumchlorid, 10 g Talgfettalkylpropylendiamin sowie 4,8 g 4,4'-Diamino-dicyclohexyl-methan mit einem trans,trans-Gehalt von 40 % hinzu. Das Reaktionsgemisch wird auf 90-100°C erhitzt und die Temperatur für 30 min gehalten. Man stellt durch Zugabe von ca. 49,5 g einer 50 %igen Natronlaugelösung alkalisch und hält die Temperatur für weitere 2 h bei 90-100°C. Anschließend wird das Produkt filtriert, gewaschen, getrocknet und gemahlen.

Die nach Beispiel 1 hergestellte Pigmentpräparation verfügt über eine gute Dispergierbarkeit und zeichnet sich dadurch aus, dass man daraus Tiefdruckfarben auf Toluolbasis herstellen kann, die sehr glänzende und nichtdurchschlagende Drucke mit hoher optischer Dichte ergeben.

### Beispiel 2

Man stellt eine Azopigmentpräparation gemäß Beispiel 1 her, mit dem Unterschied, dass man 4,4'-Diamino-dicyclohexyl-methan mit einem trans,trans-Gehalt von 25 % einsetzt.
Eine gemäß Beispiel 2 hergestellte Pigmentpräparation liefert im Vergleich zu Beispiel 1 eine Tiefdruckfarbe mit geringfügig erhöhter Viskosität und Drucke mit gutem Glanz und vergleichbaren optischen Dichten.

### Vergleichsbeispiel

Man stellt eine Azopigmentpräparation gemäß Beispiel 1 her, mit dem Unterschied, dass man 4,4'-Diamino-dicyclohexyl-methan mit einem trans,trans-Gehalt von etwa 20 % einsetzt.

Eine gemäß Vergleichsbeispiel hergestellte Pigmentpräparation liefert im Vergleich zu Beispiel 1 eine Tiefdruckfarbe mit deutlich erhöhter Viskosität und daraus hergestellte Drucke mit geringerem Glanz, geringerer Farbstärke und deutlich niedrigeren optischen Dichten.

### Beispiel 3

Man stellt eine Azopigmentpräparation gemäß Beispiel 1 her, mit dem Unterschied, dass 7.4 g 4,4'-Diamino-dicyclohexyl-methan eingesetzt werden.
Eine gemäß Beispiel 3 hergestellte Pigmentpräparation liefert im Vergleich zu Beispiel 1 eine Tiefdruckfarbe mit röterem Farbton, daraus hergestellte Drucke zeichnen sich durch verbesserten Glanz und höhere optische Dichten, vor allem bei großen Näpfchentiefen, aus.

### Beispiel 4

Man stellt eine Azopigmentpräparation gemäß Beispiel 1 her, mit dem Unterschied, dass das 4,4'-Diamino-dicyclohexyl-methan vor dem Kupplungsschritt zugegeben wird. Man erhält ein Produkt mit vergleichbaren Eigenschaften.

### Beispiel 5

Man stellt eine Azopigmentpräparation gemäß Beispiel 1 her, mit dem Unterschied, dass das 4,4'-Diamino-dicyclohexyl-methan nach der Filtration zum Presskuchen zugegeben wird. Der Presskuchen wird anschließend homogenisiert, getrocknet und gemahlen. Man erhält ein Produkt mit vergleichbaren Eigenschaften.

### Beispiel 6: P.Y. 126

Man stellt eine Azopigmentpräparation gemäß Beispiel 1 her, mit dem Unterschied, dass man 6 g des eingesetzten Acetessiganilids durch 7 g Acetessig-p-anisidid ersetzt. Man erhält ein rotstichiges Produkt.

### Beispiel 7:

Man stellt eine Azopigmentpräparation gemäß Beispiel 1 her, mit dem Unterschied, dass man 2.8 g des Acetessiganilids durch 4.7 g des Kaliumsalzes von p-Acetoacetylamino-benzolsulfonsäure ersetzt.
Man erhält eine Pigmentpräparation, die im Vergleich zu Beispiel 1 eine grünstichigere Tiefdruckfarbe ergibt, daraus hergestellte Drucke zeichnen sich durch eine erhöhte Transparenz aus.

### Beispiel 8: P.Y. 114

Man stellt-eine Azopigmentpräparation gemäß Beispiel 1 her, mit dem Unterschied, dass man 6 g des eingesetzten Acetessiganilids durch 6.5 g Acetessig-p-toluidid ersetzt. Man erhält ein rotstichiges Produkt, eine daraus hergestellte Tiefdruckfarbe auf Toluolbasis liefert Drucke mit verbesserter optischer Dichte.

### Beispiel 9

Man stellt eine Azopigmentpräparation gemäß Beispiel 1 her, mit dem Unterschied, dass das verwendete Talgfettpropylendiamin durch Talgfettdipropylentriamin ersetzt wird. Man erhält eine grünstichigere Pigmentpräparation mit vergleichbar guten Eigenschaften wie die aus Beispiel 1.

### Beispiel 10

Man stellt eine Azopigmentpräparation gemäß Beispiel 9 her, mit dem Unterschied, dass das Talgfettdipropylentriamin vor dem Kupplungsschritt zugegeben wird. Man erhält eine Pigmentpräparation mit vergleichbar guten Eigenschaften.

### Beispiel 11: Mischung aus P.0.13 + P.Y.12

5,3 g 1-Phenyl-3-methyl-5-pyrazolon (PMP) werden in 100 g Wasser und 2,8 g 50 %iger Natronlauge suspendiert und solange verrührt, bis man eine klare Lösung erhält. Das PMP wird danach durch langsame Zugabe von 2,8 g 80 %iger Essigsäure ausgefällt. In einem separaten Gefäß werden 47,9 g Acetessiganilid in 616 g Wasser und 51,8 g 50 %iger Natronlauge zu einer klaren Lösung verrührt.

Man kühlt auf 0-5°C, gibt 2 g Oleylaminacetat hinzu und fällt das Acetessiganilid unter Zugabe von 25,4 g 80 %iger Essigsäure aus.
Die Kupplungsreaktion wird durchgeführt, indem man so viel einer gemäß Beispiel 1 hergestellten DCB-Tetrazolösung zugibt, bis ein leichter Diazoüberschuß festgestellt werden kann. In einem zweiten Kupplungsschritt wird zu dem Reaktionsgemisch das gefällte Acetessiganilid zugegeben und die Kupplungsreaktion mit Hilfe der restlichen DCB-Tetrazolösung zu Ende gebracht. Die weitere Präparation des Pigments erfolgt gemäß den Angaben aus Beispiel 1. Im Vergleich zu Beispiel 1 erhält man eine rotstichigere Pigmentpräparation, eine aus dieser hergestellte Druckfarbe ist niedrigviskoser und farbstärker im Druck.

### Beispiel 12

In 716 g Wasser und 54,6 g einer 50 %igen Natronlauge werden 5,3 g PMP sowie 47,9 g Acetessiganilid suspendiert und zu einer klaren Lösung verrührt. Man kühlt auf 0-5°C ab, gibt 2 g Oleylaminacetat zu und fällt die Kupplungskomponenten durch Zugabe von 28,2 g 80 % iger Essigsäure aus. Die Kupplungsreaktion wird durch Zugabe einer gemäß Beispiel 1 hergestellten DCB-Tetrazolösung innerhalb von 90 min durchgeführt. Die weitere Präparation des Pigments erfolgt gemäß den Angaben aus Beispiel 1.
Im Vergleich zu Beispiel 1 erhält man eine rotstichigere Pigmentpräparation, eine aus dieser hergestellten Druckfarbe ist niedrigviskoser und farbstärker im Druck.

## Patentansprüche

1. Azopigmentpräparation, **gekennzeichnet durch** einen Gehalt an 4,4'-Diamino-dicyclohexyl-methan, wobei der Anteil des trans, trans-Isomeren mindestens 25 %, bezogen auf die Gesamtmenge an 4,4'-Diamino-dicyclohexyl-methan, beträgt.

2. Azopigmentpräparation nach Anspruch 1, **dadurch gekennzeichnet, dass** der Anteil des trans, trans-Isomeren 25 bis 75 %, bezogen auf die Gesamtmenge an 4,4'-Diamino-dicyclohexyl-methan, beträgt.

3. Azopigmentpräparation nach Anspruch 1 oder 2, **dadurch gekennzeichnet, dass** der Anteil des trans, trans-Isomeren 35 bis 60 %, bezogen auf die Gesamtmenge an 4,4'-Diamino-dicyclohexyl-methan, beträgt.

4. Azopigmentpräparation nach mindestens einem der Ansprüche 1 bis 3, **gekennzeichnet durch** einen Gehalt an 4,4'-Diamino-dicyclohexyl-methan von 2 bis 30 Gew.-%, bezogen auf das Gewicht des Azopigments.

5. Azopigmentpräparation nach mindestens einem der Ansprüche 1 bis 4, **gekennzeichnet durch** einen Gehalt an 4,4'-Diamino-dicyclohexyl-methan von 5 bis 20 Gew.-%, bezogen auf das Gewicht des Azopigments.

6. Azopigmentpräparation nach mindestens einem der Ansprüche 1 bis 4, **gekennzeichnet durch** einen Gehalt an einem langkettigen aliphatischen primären Amin mit 6 bis 30 C-Atomen.

7. Azopigmentpräparation nach Anspruch 6, **gekennzeichnet durch** einen Gehalt an einem langkettigen aliphatischen primären Amin mit 6 bis 30 C-Atomen von 1 bis 30 Gew.-%, bezogen auf das Gesamtgewicht der Azopigmentpräparation.

8. Azopigmentpräparation nach mindestens einem der Ansprüche 1 bis 7, **dadurch gekennzeichnet, dass** das Azopigment ein Diarylgelbpigment ist.

9. Azopigmentpräparation nach mindestens einem der Ansprüche 1 bis 8,
**dadurch gekennzeichnet, dass** das Azopigment C.1. Pigment Yellow 12, 13, 14, 17, 55, 63, 81, 83, 87, 90, 106, 113, 114, 121, 124, 126, 127, 136, 152, 170, 171, 172, 174, 176, 188 oder C.I. Pigment Red 53:1 ist.

10. Azopigmentpräparation nach mindestens einem der Ansprüche 1 bis 9, **dadurch gekennzeichnet, dass** 1 bis 25 Gew.-%, bezogen auf das Gesamtgewicht der Azopigmentpräparation, eines Additivs aus der Gruppe der Fettalkoholpolyglykolether, Alkylphenolpolyglykolether, der quartären Ammoniumsalze von Fettaminen und Fettamin-N-oxiden oder einer Kombination davon enthalten sind.

11. Verfahren zur Herstellung einer Azopigmentpräparation nach mindestens einem der Ansprüche 1 bis 10, **dadurch gekennzeichnet, dass** das 4,4'-Diamino-dicyclohexyl-methan mit einem trans, trans-Anteil von mindestens 25 % vor, während oder nach der Azokupplung, aber noch vor der Isolierung des Azopigments zugesetzt wird.

12. Verwendung einer Azopigmentpräparation nach mindestens einem der Ansprüche 1 bis 10 zum Pigmentieren von hochmolekularen organischen Materialien natürlicher oder synthetischer Herkunft.

13. Verwendung nach Anspruch 12 zur Herstellung von Druckfarben.

14. Druckfarbe, enthaltend eine Azopigmentpräparation nach mindestens einem der Ansprüche 1 bis 10.

## Claims

1. An azo pigment formulation comprising 4,4'-diaminodicyclohexylmethane wherein the fraction of the trans, trans-isomer is at least 25%, based on the total amount of 4,4'-diaminodicyclohexylmethane.

2. The azo pigment formulation as claimed in claim 1 wherein the fraction of the trans, trans-isomer is in the range from 25% to 75%, based on the total amount of 4,4'-diaminodicyclohexylmethane.

3. The azo pigment formulation as claimed in claim 1 or 2 wherein the fraction of the trans, trans-isomer is in the range from 35% to 60%, based on the total amount of 4,4'-diaminodicyclohexylmethane.

4. The azo pigment formulation as claimed in at least one of claims 1 to 3 **characterized by** a 4,4'-diaminodicyclohexylmethane content of 2% to 30% by weight, based on the weight of the azo pigment.

5. The azo pigment formulation as claimed in at least one of claims 1 to 4 **characterized by** a 4,4'-diaminodicyclohexylmethane content of 5% to 20% by weight, based on the weight of the azo pigment.

6. The azo pigment formulation as claimed in at least one of claims 1 to 4 comprising a long-chain aliphatic primary amine of 6 to 30 carbon atoms.

7. The azo pigment formulation as claimed in claim 6 comprising a long-chain aliphatic primary amine of 6 to 30 carbon atoms in an amount of 1% to 30% by weight, based on the total weight of the azo pigment formulation.

8. The azo pigment formulation as claimed in at least one of claims 1 to 7 wherein the azo pigment is a diaryl yellow pigment.

9. The azo pigment formulation as claimed in at least one of claims 1 to 8 wherein the azo pigment is C.I. Pigment Yellow 12, 13, 14, 17, 55, 63, 81, 83, 87, 90, 106, 113, 114, 121, 124, 126, 127, 136, 152, 170, 171, 172, 174, 176, 188 or C.I. Pigment Red 53:1.

10. The azo pigment formulation as claimed in at least one of claims 1 to 9 comprising 1% to 25% by weight, based on the total weight of the azo pigment formulation, of an additive selected from the group consisting of fatty alcohol polyglycol ethers, alkylphenol polyglycol ethers, quaternary ammonium salts of fatty amines and fatty amine N-oxides or a combination thereof.

11. A process for producing an azo pigment formulation as claimed in at least one of claims 1 to 10, which comprises adding the 4,4'-diaminodicyclohexylmethane having a trans,trans fraction of at least 25% before, during or after azo coupling, but before isolation of the azo pigment.

12. The use of an azo pigment formulation as claimed in at least one of claims 1 to 10 for pigmenting macromolecular organic materials of natural or synthetic origin.

13. The use as claimed in claim 12 in the manufacture of printing inks.

14. A printing ink comprising an azo pigment formulation as claimed in at least one of claims 1 to 10.

## Revendications

1. Préparation de pigment azo, **caractérisée par** une teneur en 4,4'-diaminodicyclohexylméthane, la proportion des isomères trans,trans étant d'au moins 25%, par rapport à la quantité totale de 4,4'-diaminodicyclohexylméthane.

2. Préparation de pigment azo selon la revendication 1, **caractérisée en ce que** la proportion d'isomères trans,trans est de 25 à 75%, par rapport à la quantité totale de 4,4'-diaminodicyclohexylméthane.

3. Préparation de pigment azo selon la revendication 1 ou 2, **caractérisée en ce que** la proportion d'isomères trans, trans est de 35 à 60%, par rapport à la quantité totale de 4,4'-diaminodicyclohexylméthane.

4. Préparation de pigment azo selon au moins l'une quelconque des revendications 1 à 3, **caractérisée par** une teneur en 4,4'-diaminodicyclohexylméthane de 2 à 30% en poids, par rapport au poids du pigment azo.

5. Préparation de pigment azo selon au moins l'une quelconque des revendications 1 à 4, **caractérisée par** une teneur en 4,4'-diaminodicyclohexylméthane de 5 à 20% en poids, par rapport au poids du pigment azo.

6. Préparation de pigment azo selon au moins l'une quelconque des revendications 1 à 4, **caractérisée par** une teneur en amine primaire aliphatique à longue chaîne comprenant 6 à 30 atomes de carbone.

7. Préparation de pigment azo selon la revendication 6, **caractérisée par** une teneur en amine primaire aliphatique à longue chaîne comprenant 6 à 30 atomes de carbone de 1 à 30% en poids par rapport au poids total de la préparation de pigment azo.

8. Préparation de pigment azo selon au moins l'une quelconque des revendications 1 à 7, **caractérisée en ce que** le pigment azo est un pigment jaune diaryle.

9. Préparation de pigment azo selon au moins l'une quelconque des revendications 1 à 8, **caractérisée en ce que** le pigment azo est le C.I. Pigment Yellow 12, 13, 14, 17, 55, 63, 81, 83, 87, 90, 106, 113, 114, 121, 124, 126, 127, 136, 152, 170, 171, 172, 174, 176, 188 ou le C.I. Pigment Red 53:1.

10. Préparation de pigment azo selon au moins l'une quelconque des revendications 1 à 9, **caractérisée en ce qu'**elle contient 1 à 25% en poids, par rapport au poids total de la préparation de pigment azo, d'un additif du groupe des polyglycoléthers d'alcools gras, des polyglycoléthers d'alkylphénols, des sels d'ammonium quaternaire d'amines grasses et des N-oxydes d'amines grasses ou une combinaison de ceux-ci.

11. Procédé pour la préparation d'une préparation de pigment azo selon au moins l'une quelconque des revendications 1 à 10, **caractérisé en ce que** le 4,4'-diaminodicyclohexylméthane est additionné d'une proportion trans-trans d'au moins 25% avant, pendant ou après le couplage azo, mais avant l'isolement du pigment azo.

12. Utilisation d'une préparation de pigment azo selon au moins l'une quelconque des revendications 1 à 10 pour la pigmentation de matériaux organiques de haut poids moléculaire d'origine naturelle ou synthétique.

13. Utilisation selon la revendication 12 pour la préparation d'encres d'imprimerie.

14. Encre d'imprimerie contenant une préparation de pigment azo selon au moins l'une quelconque des revendications 1 à 10.
